# NEUE EUROPÄISCHE PATENTSCHRIFT

(11) **EP 0 961 724 B2**
(45) Veröffentlichungstag und Bekanntmachung des Hinweises auf die Entscheidung über den Einspruch: **12.09.2007**
(45) Hinweis auf die Patenterteilung: 02.05.2002
(21) Anmeldenummer: 98909315.8
(22) Anmeldetag: 02.02.1998
(51) Int. Cl.: B60T 13/74, B60T 8/88, B60R 16/02, F16D 65/16

(54) **BREMSANLAGE FÜR EIN KRAFTFAHRZEUG UND VERFAHREN ZUM ÜBERMITTELN VON DATEN IN EINER ELEKTRISCH GESTEUERTEN KRAFTFAHRZEUG-BREMSANLAGE**
BRAKING SYSTEM FOR A MOTOR VEHICLE AND METHOD FOR TRANSMITTING DATA IN AN ELECTRICALLY CONTROLLED BRAKING SYSTEM FOR MOTOR VEHICLES
SYSTEME DE FREINAGE POUR AUTOMOBILE ET PROCEDE DE TRANSMISSION DE DONNEES DANS UN SYSTEME DE FREINAGE D'AUTOMOBILE A COMMANDE ELECTRIQUE

(30) Priorität: 19.02.1997 DE 19706479
(43) Veröffentlichungstag der Anmeldung: 08.12.1999
(73) Patentinhaber: PACIFICA GROUP TECHNOLOGIES PTY LTD, Victoria, 3165 (AU)
(72) Erfinder: ZITTLAU, Dirk, D-92348 Stöckelsberg (DE); DEML, Ulrich, D-93138 Lappersdorf (DE)
(74) Vertreter: Vossius, Corinna
(86) Internationale Anmeldenummer: PCT/DE1998/000289
(87) Internationale Veröffentlichungsnummer: WO 1998/036956

(56) Entgegenhaltungen:
- EP-A- 0 247 026
- WO-A-94/06080
- WO-A-97/06514
- DE-A- 19 509 133
- DE-A- 19 529 434
- US-A- 4 995 483
- US-B- 4 995 483
- ATZ 98(1996), Balz et al. : "Konzept für eine elktromechanische Pahrzeugbremse"
- Hinsch, Hermann :"Elektronik : ein Werkzeug für Naturwissenschaftler,Pulsmodulation (PM), Seite 220"(Springer-Verlag 1996)
- Manfred Burckhardt : "Radschlupf-Regelsysteme", Fahrwerktechnik, 1. Auflage, Vogel-Verlag,1993

## Beschreibung

Die Erfindung betrifft eine Bremsanlage für ein Kraftfahrzeug und ein Verfahren zum Übermitteln von Daten in einer elektrisch gesteuerten Kraftfahrzeug-Bremsanlage.

Neue Anforderungen an die Bremssysteme von Kraftfahrzeugen - wie Antiblockiersysteme, Fahrstabilitätssysteme, Antriebsschlupfsysteme oder Traktionskontrollen, sogenannte intelligente Tempomaten, Bremsassistent usw. - haben zusammen mit der Forderung nach einer Verringerung der Montage und Wartungskosten, die bei den derzeitigen hydraulischen Bremssystemen recht erheblich sind, zu der Entwicklung neuer, rein elektrischer Bremssysteme (auch unter der Bezeichnung Brake-by-wire bekannt) geführt (DE 195 11 287 A1; Zeitschrift mot 20 (1995), Seite 46).

Bei solchen elektrischen Bremssystemen ist der Fahrer kraftmäßig von der Bremse abgetrennt, das heißt die von dem Fahrer ausgehende Bremsmomentanforderung wird nicht mehr direkt als Kraft über ein hydraulisches System übertragen, sondern nur noch als Signal über eine elektrische Leitung. Mit Hilfe dieses Signals wird ein elektrischer Bremsaktuator oder -aktor gesteuert, der mit einer elektrischen Energieversorgung eine Kraft an einer Bremse erzeugt, welche über ein Reibelement das gewünschte Bremsmoment erzeugt. Im Falle einer Scheibenbremse wird die das Bremsmoment über Reibung erzeugende Kraft als Zuspannkraft bezeichnet.

Bei einem vollelektrischen Bremssystem, wie es zum Beispiel in der älteren Anmeldung DE 196 15 186.4 (unser Zeichen: GR 96 P 1368 DE) beschrieben ist, ist der Bremsaktor direkt an dem jeweiligen Rad des Kraftfahrzeugs angebracht, so daß eine Zuspannkraft zweckmäßigerweise nicht über weite Strecken im Fahrzeug übertragen wird, während die Erfassung der Bremsmomentanforderung durch den Fahrer und die Bremssteuerung an zentraler Stelle, zum Beispiel in der Nähe des Bremspedals, angeordnet sind. Das Bremssystem ist somit über das gesamte Kraftfahrzeug verteilt und da es eine zentrale Sicherheitsfunktion des Kraftfahrzeugs bildet, sind an die elektrische Übermittlung der Bremsmomentanforderung erhöhte Sicherheitsbedingungen zu erfüllen. Die Übermittlung muß störungssicher und fehlertolerant sein, das heißt bei der Übermittlung auftretende Fehler müssen von dem Bremssystem sicher erkannt werden und es müssen geeignete Strategien zur Fehlerbehandlung vorliegen. Außerdem müssen alle Teilnehmer an der elektrischen Kommunikation ein fehlerhaftes Verhalten eines anderen Teilnehmers erkennen können. Insbesondere muß auch beim Ausfall der Kommunikation eine Mindestbremsfähigkeit gewährleistet bleiben.

Der Erfindung liegt die Aufgabe zugrunde, eine störungssichere und fehlertolerante Bremsanlage. insbesondere im Hinblick auf die Kommunikation über elektrische Leitungen, zu schaffen.

Diese Aufgabe wird erfindungsgemäß durch die Bremsanlage nach Anspruch 1 und das Verfahren zum Übermitteln von Daten nach Anspruch 5 gelöst. Zweckmäßige Weiterbildungen der Erfindung sind in den Unteransprüchen niedergelegt.

Die Vorteile der Erfindung liegen insbesondere darin, daß die Fehlersicherheit und die Fehlerkorrekturmaßnahmen der Bremsanlage mit geringem Aufwand erreicht werden.

Ausführungsbeispiele der Erfindung werden im folgenden anhand der Zeichnungen erläutert. Es zeigen:
- Figur 1: ein Kraftfahrzeug mit einer erfindungsgemäßen Bremsanlage in schematischer Darstellung, und
- Figur 2: die Struktur der Datenkommunikation der Bremsanlage nach Figur 1.

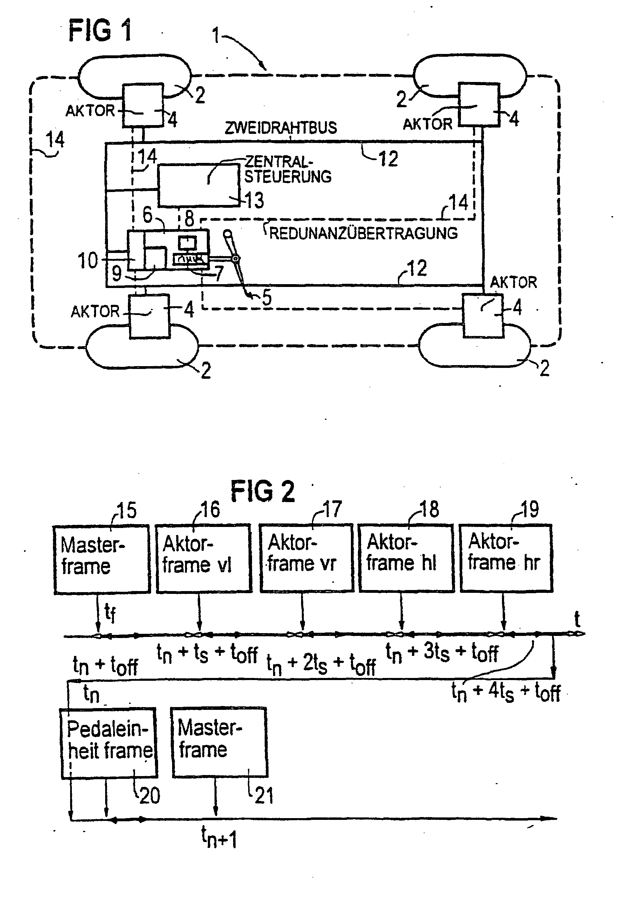

Ein Kraftfahrzeug, das in Figur 1 nur schematisch dargestellt ist, ist mit einer Bremsanlage 1 versehen, die an jedem seiner vier Räder 2 eine (nicht dargestellte) Bremse einschließt, die von jeweils einem elektrisch gesteuerten Bremsaktor 4 betätigt wird. Die Bremsen werden von dem Fahrer des Kraftfahrzeugs betätigt, indem er über ein Bremspedal 5, das mit einer Pedaleinheit 6 verbunden ist, eine Bremsmomentanforderung abgibt. Die Pedaleinheit 6 wirkt als Pedalkraftsimulator. sie ist mit einer Feder 7 und mit einem oder mehreren Kraftsensoren und mindestens einem Wegsensor versehen, die die Betätigung des Bremspedals 5 durch den Fahrer erfassen und in elektrische Signale umsetzen. Diese Sensoren sind zusammengefaßt durch einen Block 8 dargestellt. Die hier nicht dargestellten Sensoren sind in der oben genannten älteren Anmeldung beschrieben.

Die Pedaleinheit 6 ist durch einen Datenbus 12 mit einer Zentralsteuerung 10 und mit den Bremsaktoren (oder -aktuatoren) 4 verbunden. Eine zusätzliche Signalleitung 14, die eine redundante Übertragung von Steuersignalen und Daten ermöglicht, verbindet die Pedaleinheit 6 ebenfalls mit der Zentralsteuerung 10 und den Bremsaktoren 4. Außerdem verbindet sie diese Aktoren untereinander. Die Art der Daten- und Signalübertragung über den Datenbus 12 und die zusätzliche oder redundante Signalleitung 14 wird nachfolgend beschrieben.

Die Bremsaktoren 4 sind bei einem voll elektrischen Bremssystem direkt an jedem Rad 2 angebracht, da die Zuspannkraft für die jeweilige Bremse zweckmäßigerweise nicht über weite Strekken im Fahrzeug übertragen wird, während die Erfassung der Fahrer-Bremsmomentenanforderung und die Systemsteuerung sich zentral bei dem oder in der Nähe des Bremspedals 5 befinden. Daraus folgt, daß die Bremsanlage über das gesamte Fahrzeug verteilt ist. Der Bremsaktor kann dabei die Zuspannkraft an der Bremszange auf verschiedene Art und Weise erzeugen, zum Beispiel über eine mechanische oder eine hydraulische Übersetzung. Die elektrische Übermittlung der Bremsmomentenanforderung im System besondere Sicherheitsanforderungen zu stellen. Sie muß störsicher und fehlertolerant sein, d.h. auftretende Fehler in der Daten- und Signalübermittlung (oder: Kommunikation) müssen sicher erkannt werden und es müssen geeignete Strategien zur Fehlerbehandlung vorliegen. Zusätzlich müssen alle Teilnehmer der Kommunikation ein fehlerhaftes Verhalten anderer Teilnehmer erkennen können und auch beim Ausfall der Kommunikation muß eine Mindestbremsfähigkeit gewährleistet bleiben.

Im folgenden wird ein Schaltung und ein Verfahren zur Kommunikation beschrieben, die diese Anforderungen auf wirtschaftlichste Art und Weise erfüllt.

lm einem elektrischen Bremssystem stellt die Bremsmomentanforderung des Fahrers eine Information dar, welche als elektrisches Signal übermittelt wird. Diese Information muß dabei wiederholt in einem festen Zeitraster von einem Teilnehmer an der Kommunikation, der Pedaleinheit 6 erfaßt werden und an mehrere weitere Teilnehmer an der Kommunikation, die Bremsaktoren 4, übermittelt werden. Zusätzlich müssen die Daten der elektronischen Zentralsteuerung 10 - die zusätzliche Bremsfunktionen, wie ABS, Antriebsschlupfregelung, Fahrdynamiksteuerung und weitere Funktionen, ausführt - den Teilnehmern übermittelt werden. Aus Sicherheitsgründen werden noch weitere Daten zwischen den Teilnehmern ausgetauscht.

Bekannte Verfahren für eine solche komplexe Kommunikation zwischen mehreren Teilnehmern benutzen einen Datenbus. In Kraftfahrzeugen wird dazu häufig der CAN Bus verwendet. Dies ist ein genormter Zweidrahtbus, welcher Daten zwischen einer großen Anzahl an Teilnehmern mit Raten zwischen 100 kBit und 1000 kBit übertragen kann. Dieser Bus ist eventgesteuert, d.h. jedes Datum stellt ein Event (Ereignis) dar, welches in Form eines bestimmten Datenblocks (auch: Frames) digital über elektrischen Leitungen übertragen wird. Die Art der Kommunikation zwischen den Teilnehmern ist dabei vorgeschrieben und hat bestimmten Formen zu genügen, ebenso das Verhalten bei Fehlern. Für die Datenübermittlung in einer Bremsanlage müßten jedoch dabei einige Nachteile in Kauf genommen werden, da dieser Bus nicht speziell für diese Aufgabe entworfen wurde, sondern eine allgemeine Lösung darstellt. Die hier zu lösende Aufgabe erfordert eine sehr regelmäßige Kommunikation in einem festen Zeitraster, und deshalb ist die eventgesteuerte Struktur ungünstig. Auch würde der sogenannte Kommunikationsoverhead (viele Teilnehmer möglich) die erforderliche Datenmenge in die Höhe treiben. Außerdem wäre der Ausfall eines Teilnehmers schwer zu erkennen, da seine Kommunikation an einen Event gebunden wäre. Bei einem Fehlerfall ist eine lawinenartige Vermehrung der Daten möglich, die die Kommunikation erheblich behindern und zu einem zeitverzögerten Abarbeiten von Bremsmomentenanforderungen führen kann. Besonders dies ist ein gewichtiger Nachteil, da ein solcher Fall als Teil der Kommunikationsbeschreibung nur schwer zu vermeiden ist. aber eine drastische Einschränkung der Sicherheitsanforderungen bedeutet. Diese Einschränkungen werden durch die nachfolgend beschriebene Lösung vermieden.

In der Pedaleinheit 6, welche das herkömmliche Bremspedal als Schnittstelle zum Fahrer ersetzt, wird mit Hilfe von Sensoren die Fahrer-Bremsmomentenanforderung ermittelt. Die elektronischen Zentralsteuerung oder zentralen Steuereinheit 10, welche die höheren elektronischen Bremsfunktionen wie ABS, Traction Control, Fahrdynamikregelung, Bremsassistent etc. verwirklicht, bildet eine Schnittstelle zu anderen Fahrzeugsteuerungen, zum Beispiel der Motorsteuerung. Sie kann an beliebiger Stelle im Kraftfahrzeug angeordnet sein. Ihre Funktionen der können auf mehrere Steuereinheiten verteilt werden, oder für ein ganz einfaches Bremssystem auch entfallen.

Die Grundfunktion der Bremsanlage 1 ist wie folgt: Die Pedaleinheit 6 ermittelt den Fahrerbremswunsch, aus diesem errechnet ein in ihr enthaltener Mikroprozessor 9 eine Zuspannkraft der Bremszangen, die von den elektrischen Aktoren aufgebracht werden muß (dies kann durch eine direkte Krafterzeugung oder durch eine Druckerzeugung erfolgen). Dazu muß ein entsprechender Zuspann-Sollwert an die Bremsaktoren 4 übertragen werden. Der Bremsaktor stellt die Zuspannkraft eigenständig ein und ermittelt einen Zuspann-Istwert. Die Zentralsteuerung 10 kann, entsprechend dem Umfang der in ihr enthaltenen Steuerfunktionen, die Sollwerte verändern. Zum Beispiel bei einem ABS Fall vermindert sie die Sollwerte so, daß das jeweilige Rad nicht mehr blockiert. Bei einem Fahrdynamiksystem fordert die Zentralsteuerung selbständig Zuspann-Sollwerte an bestimmten Rädern an.

Bei einem vorteilhaft funktionierenden Bremssystem müssen folgende Daten zwischen den Teilnehmern ausgetauscht werden: Die Bremsmomentanforderung durch den Fahrer muß an die Zentralsteuerung 10 und an die Bremsaktoren 4 übermittelt werden, die Sollwerte der Zentralsteuerung 10 müssen an die Bremsaktoren übermittelt werden, die Sensorwerte der Bremsaktoren müssen an die Zentralsteuerung übermittelt werden, Daten über den Zustand der einzelnen Teilnehmer müssen übermittelt werden (z.B. Fehlerdaten zum Zwecke einer gemeinsamen Reaktion). Diese Werte müssen regelmäßig in einem festen Zeitraster erneuert werden, da sie die Grundlage für verschiedene Regelvorgänge sind. Die Updateraten können sehr hoch liegen, nach bisherigen Erfahrungen sind Aktualisierungsfrequenzen zwischen 500 und 100 Hz erforderlich. Es findet also ein sehr ausgiebiger Datenverkehr statt, der hohen Sicherheitsanforderungen genügen muß:
- er darf nicht ausfallen oder blockiert werden können,
- er darf sich nicht erheblich verzögern,
- Fehler im Datenverkehr müssen sicher, schnell und einfach erkannt werden können, und
- Fehler bei den Teilnehmern müssen sicher und schnell erkannt werden können.

Diese Anforderungen werden wie folgt erfüllt:

Der Datenverkehr erfolgt über den Datenbus 12, der als ein Zweidrahtbus mit symmetrischer Übertragung binärer Signale (zum Beispiel nach RS 485 Norm) ausgeführt ist. Alle Teilnehmer (Bremsaktoren 4, Pedaleinheit 6, Zentralsteuerung 10) bilden je einen Knoten des Datenbusses. Aus Sicherheitsgründen werden keine weiteren Knoten mit Sendeberechtigung am Bus aufgenommen (ist die Zahl der Teilnehmer möglichst gering, ergibt sich eine niedrige Fehlerrate). Der Datenverkehr erfolgt nicht eventgesteuert sondern zeitgesteuert, d.h. jeder Teilnehmer erhält innerhalb eines festen zyklischen Ablaufs eine feste Zeitscheibe (oder Zeitschlitz), in der er die Sendeberechtigung besitzt. Teilt man zum Beispiel jedem Teilnehmer eine gleich lange Zeitscheibe von 2 ms zu, dauert der komplette Buskommunikationszyklus in einem System mit sechs Teilnehmern 12 ms, danach beginnt ein neuer Buszyklus (Figur 2).

Ein Bus-Master beginnt mit seinem Datenblock 15 (Figur 2) oder "Frame" den Buszyklus, d.h. er sendet in der Zeitscheibe Nummer 1. Als Bus-Master wirkt die Zentralsteuerung 10 . Alle anderen Teilnehmer reagieren auf das Aussenden des Master-Datenblocks. Es gibt eine gemeinsame Zeitbasis: der Bus-Master synchronisiert alle anderen Teilnehmer auf seine Zeitbasis. Die Synchronisierung muß dabei nur so genau sein, daß die Zeitscheibenaufteilung sicher erfolgen kann. Das Format der Datenblöcke kann unterschiedlich gestaltet werden, bevorzugt wird hier ein einheitlicher Aufbau aller verwendeten Datenblöcke (von gleicher Länge) mit mindestens folgenden Steuerinformationen: Kennbyte = Nummer des aktuellen Blocks, wird vom Bus-Master vorgegeben, und während eines Buszyklus von allen Teilnehmern verwendet. Adressbits = geben die Adresse des Absenders an. Check-Bits = Prüfsumme, die nach bekannten Verfahren über den gesamten Block gebildet wird. Datenbytes = Informationsinhalt des Blocks.

Es gibt eine Ersatz-Datenverbindung über die zusätzliche Signalleitung 10, die genutzt wird, wenn auf dem Datenbus ein irreversibler Fehler auftritt. Diese Verbindung erfolgt bevorzugt in Form einer pulsweitenmodulierten Datenübertragung, die nur die Basisbremsfunktion realisiert, d.h. den gemessenen Fahrerwunsch (Bremsmomentanforderung) von der Pedaleinhei 6 an alle Teilnehmer übermittelt.

Die verwendeten Datenblöcke haben einen einheitlichen Datenaufbau, sie bestehen generell aus zwölf Bytes: Das erste Byte enthält die Kennung und die Absenderadresse, das zweite Byte eine Anweisung, Byte 3 bis 11 Daten, Byte 12 die Prüfsumme.

Der Bus-Master beginnt nach einer Selbstinitialisierung die Kommunikation mit seinem ersten Datenblock 15. Dieser enthält eine Anweisung zur Zeitsynchronisierung. Alle Teilnehmer synchronisieren auf den Zeitpunkt des ersten Bits des Blocks. Teilnehmer, die zu diesem Zeitpunkt bereit sind zu senden, senden ihren Datenblock innerhalb ihrer Zeitscheibe. Es sind dies Datenblöcke 16, 17, 18 und 19 der Bremsaktoren 4 für das vordere Rad links vl, vordere Rad rechts vr, hintere Rad links hl beziehungsweise hintere Rad rechts hr, sowie ein Datenblock 20 der Pedaleinheit 6. Danach beginnt der Buszyklus erneut mit dem nächsten Master-Datenblock 21 usw.

Der Bus-Master wiederholt die Zeitsynchronisierung alle 50 ms, weitere Teilnehmer können sich darauf in ihrer Zeitscheibe melden. Ein Teilnehmer, der sich zu Beginn nicht meldet oder später häufig Blöcke ausfallen läßt wird als gestört abgeschaltet. Die Übertragung eines Blocks dauert ca. 1 ms, die Zeitscheibe dauert 2 ms, innerhalb der Zeitscheibe darf der Zeitpunkt variieren, ohne daß dies als Fehler gewertet wird. Eine Übertragung außerhalb der Zeitscheibe ist nicht gestattet und wird als schwerer Fehler behandelt.

Der Bus-Master sendet die Zuspannkraftsollwerte an die einzelnen Bremsaktoren 4, diese regeln die von ihnen erzeugte Zuspannkraft auf diesen Sollwert, dabei hat eine Regelschleife des Bremsaktors bevorzugt die gleiche Zeitdauer wie der Datenbuszyklus. In seinem Antwortblock sendet der Bremsaktor einen von ihm gemessenen Zuspannkraftwert (oder ein äquivalentes Messergebnis) an den Bus-Master zurück, und zwar zusammen mit weiteren am Bremsaktor ermittelten Sensordaten (z.B. Raddrehzahl).

Die Zuspannkraft wird in der Zentralsteuerung 10 aus den in der Pedaleinheit 6 ermittelten Sensorwerten (= Fahrerwunsch) berechnet. Zusätzlich sind hier auch alle Zusatzfunktionen der Bremse verwirklicht, d.h. die vom Fahrer kommende Bremsmomentenanforderung wird gemäß den Ergebnissen des elektronischen Bremsenmanagements verändert, zum Beispiel im ABS Fall vermindert, oder bei einer Traktionskontrolle an der Antriebsachse aufgebaut. Dazu wird eine neue Zuspannsollkraft berechnet und versendet. Dabei beobachtet jeder Teilnehmer den Datenverkehr auf dem Bus und reagiert bei Fehlern in der nachfolgend beschriebenen Art und Weise.

In der Pedaleinheit 6 wird der Fahrerwunsch gemessen und mit Hilfe einer Sicherheitsschaltung 10, die zum Beispiel eine 2 aus 3-Mehrheitentscheidung herbeiführt, aus den Sensorsignalen eine Bremsmomentenanforderung parallel zu der Zentralsteuerung 10 berechnet. Sie wird ständig per PWM-Übertragung an alle anderen Teilnehmer übermittelt. Solange keine Veränderung der Sollwerte durch die Zentralsteuerung vorliegt (z.B. im ABS-Fall), müssen die Sollwerte bei beiden Übertragungen übereinstimmen, es kann also eine Überprüfung beider Datenverbindungen erfolgen.

Der besondere Vorteil dieser Anordnung liegt in der Störungssicherheit. Auf alle Fehler kann einfach und schnell reagiert werden, und zwar ohne großen Schaltungsaufwand. Insbesondere können alle Arten von Fehlern auf Grund der besonderen Gestaltung mit einer zeitscheibenorientierten Kommunikation sicher und schnell erkannt werden. Zusätzlich ist diese Art der Kommunikation besonders geeignet für die Aufgabe, regelmäßig Steuerdaten an ein Netz von Teilnehmern zu senden.
(1) Blockstörungen zum Beispiel durch EMV-Einstreuungen: werden durch das Prüfbyte erkannt. Reaktion: Ignorieren des Blocks, da nach kurzer Zeit neuer Block ankommt. Selbst wenn im Prüfbyte ein einzelnes Fehlerdatum nicht erkannt wird, wird dieses durch den nächsten Block überschrieben.
(2) Teilnehmer erkennen internen Fehler. Dieser kann über den Datenbus 12 weitergemeldet werden. und die Zentralsteuerung kann darauf reagieren, zum Beispiel den Ausfall eines Aktors 4 durch stärkere Ansteuerung der drei verbliebenen Aktoren ausgleichen.
(3) Teilnehmer fällt aus ohne Meldung. Dies wird erkannt durch einen fehlenden Block in der zugehörigen Zeitscheibe. Die Reaktion ist wie unter (2).
(4) Ein Teilnehmer sendet in einer falschen Zeitscheibe. Dies kann erkannt werden durch ein typisches Störungsbild: mehrfach erscheint kein Block in der Zeitscheibe, ein anderer Block ist unverständlich oder zu lang. Reaktion: Neusynchronisierung durch den Bus-Master, Abschalten des falsch sendenden Teilnehmers, oder Umschalten auf parallele Übertragung.
(5) Ein Teilnehmer blockiert den Datenbus 8 durch ständiges Senden ("babbling idiot"). Dies wird durch die Zeitscheiben schnell erkannt. Reaktion wie unter (4).
(6) Der Bus-Master fällt aus oder schaltet sich bei durch Selbstdiagnose erkanntem Fehler ab. Reaktion: es wird auf die parallele Datenübertragung per PWM umgeschaltet, oder die Pedaleinheit 6 übernimmt die Funktion als Bus-Master. Dies bringt den erheblichen Vorteil, daß die Zentralsteuerung abschaltbar ist, ohne daß die Normalbremsfunktion verloren geht (Redundanzreduzierung in der Zentralsteuerung, sicherer Zustand für ABS usw.). Dies ergibt eine Sicherheit, die der Sicherheit moderner hydraulischer Brernsanlagen entspricht.
(7) Kontaktverlust zu einem Teilnehmer: Reaktion wie unter (3).
(8) Redundanzübertragung auf Signalleitung 14 fällt aus. Frühzeitiges Erkennen ist möglich durch Vergleich mit der Übertragung auf dem Datenbus 12. Reaktion: Warnung an den Fahrer, daß bei Ausfall der Buskommunikation ein Umschalten auf die Redundanzübertragung nicht möglich ist.
(9) Die Fahrenwnschermittlung in der Pedaleinheit 6 ist durch dreifache Sensoren und die Sicherheitsschaltung mit Mehrheitsentscheider gegen Fehler gesichert.

In Figur 2 werden für die Kommunikation auf dem Datenbus 12 folgende Abkürzungen verwendet:
- tₙ :: globale Zeit t, zum Zeitpunkt tₙ beginnt ein neuer Regelzyklus;
- t_{off} :: 50 µs maximale Zeit zwischen dem Beginn des Regelzyklus und Eintreffen des MasterDatenblocks beim Aktor = Beginn des Buszykluses;
- tₛ :: 2 ms Zeitraum für eine Zeitscheibe = Zeitraum zwischen Datenblöcken auf dem Datenbus, jeder Knoten muß innerhalb seiner Zeitscheibe (grauer Doppelpfeil) seinen Datenblock absetzen (Dauer t_{f}, schwarzer Doppelpfeil);
- t_{f} :: 1000 µs Zeitdauer der Datenblockübertragung (schwarzer Doppelpfeil), und
- t_{z} :: 12 ms Zeitdauer des Buszyklus für sechs Teilnehmer.

Zusammengefaßt kann gesagt werden, daß die Vorteile der oben beschriebenen Bremsanlage und Verfahrens zum Übertragen des Bremsmomentenwunsches in ihrer besonderen Stör- und Fehlersicherheit liegen. Bereits in der Struktur der Datenübermittlung ist berücksichtigt, daß auftretende Störungen sicher und schnell erkannt werden. Dies ermöglicht eine adäquate Reaktion. Ein erster Fehler kann dabei nicht zu einem Ausfall der Normalbremse führen. Die Zentralsteuerung 10 bleibt wie bisher abschaltbar, ohne daß dadurch die Normalbremse beeinträchtigt würde. Der Aufwand ist minimal im Vergleich zu anderen Bussystemen. Dies mußte durch einen gewissen Verzicht auf Flexibilität in der Kommunikation erkauft werden, da aber die besonderen Anforderungen der Bremsanlage voll berücksichtigt sind, kann dies in Kauf genommen werden. Die begrenzte Komplexität bringt zusätzlich den Vorteil einer geringstmöglichen Fehlerrate. Diesem Punkt kommt bei Bremsanlagen eine besondere Bedeutung zu.

## Patentansprüche

1. Bremsanlage (1) für ein Kraftfahrzeug, die aufweist:
- eine Pedaleinheit (6), durch die Betätigungen des Bremspedals (5) des Kraftfahrzeugs mit mindestens einem Sensor (8) erfaßt und dem Fahrerwunsch entsprechende Sollwerte für die Bremsbetätigungskraft erzeugt werden,
- den Rädern (2) des Kraftfahrzeugs zugeordnete, elektrisch betätigte Bremsaktoren (4),
- eine die Sensorsignale auswertende elektronische Zentralsteuerung (13), durch die Steuersignale für Zusatzbremsfunktionen erzeugt werden,
- einen die Pedaleinheit (6), die Bremsaktoren (4) und die Zentralsteuerung (13) miteinander verbindenden Datenbus (12), über den Datenblöcke in einem vorgegebenen, zyklisch wiederkehrenden Zeitraster ausgetauscht werden, und
- eine die Pedaleinheit (6), die Bremsaktoren (4) und die Zentralsteuerung (13) miteinander verbindende zusätzliche Signalleitung (14), über die der Sollwert für die Bremsbetätigungskraft von der Pedaleinheit (6) an die Bremsaktoren (4) und die Zentralsteuerung (13) übermittelt und Daten über den Zustand der angeschlossenen Einrichtungen ausgetauscht werden, wobei die Daten über die zusätzliche Signalleitung (14) als pulsweitenmodulierte Signale übertragen werden.

2. Bremsanlage nach Anspruch 1, **dadurch gekennzeichnet, daß** der Datenbus (12) als Zweidrahtbus für eine symmetrische Übertragung digitaler Signale ausgebildet ist und daß die an ihn angeschlossenen Teilnehmer, nämlich Bremsaktoren (4), Pedaleinheit (6) und Zentralsteuerung (13), Knoten bilden, denen von einem als Busmaster bestimmten Teilnehmer innerhalb eines Übertragungszyklus jeweils ein fester Zeitschlitz mit ausschließlicher Sendeberechtigung zugeteilt ist.

3. Bremsanlage nach einem der vorhergehende Ansprüche, **dadurch gekennzeichnet, daß** die Pedaleinheit (6) eine Sicherheitsschaltung (10) aufweist, durch die der Fahrerwunsch als Mehrheitsentscheidung aus den Signalen mehrerer die Pedalbewegung erfassender redundanter Sensoren (8) ermittelt wird.

4. Bremsanlage nach einem der vorhergehende Ansprüche, **dadurch gekennzeichnet, daß** die Bremsaktoren (4) als Regler ausgebildet sind, die die Bremsbetätigungskraft auf den empfangenen Sollwert regeln.

5. Verfahren zum Übermitteln von Daten in einer elektrisch gesteuerten Kraftfahrzeug-Bremsanlage, bei dem folgende Schritte ausgeführt werden:
- die Daten werden über einen Datenbus (12) zwischen mehreren an den Datenbus (12) als Teilnehmer angeschlossenen Bremsaktoren (4), einer Pedaleinheit (6) oder einer elektronischen Zentralsteuerung (13) zyklisch ausgetauscht;
- ein als Busmaster wirkender Teilnehmer synchronisiert alle Teilnehmer auf ein globales Zeitraster und bestimmt für jeden Teilnehmer einen festen Zeitschlitz in einem Kommunikationszyklus, innerhalb dessen er ausschließlich Sendeberechtigung hat;
- die einzelnen Teilnehmer senden Datenblöcke (16- 20) aus, die Angaben über den laufenden Übertragungszyklus und den Absender, die jeweiligen Daten und eine Prüfsumme enthalten, und
- die von den Teilnehmern gesendeten Daten schließen Bremsmomentenanforderungen des Fahrers und der elektronischen Steuerung, von Sensoren (8) gelieferte Meßwerte und Zustandsparameter der Teilnehmer ein.

6. Verfahren nach Anspruch 5, **dadurch gekennzeichnet, daß** durch einen in einem Zeitschlitz nicht übertragenen Datenblock der dem Zeitschlitz zugeordnete Teilnehmer als ausgefallen erkannt wird.

7. Verfahren nach Anspruch 5, **dadurch gekennzeichnet, daß** durch einen in einem Zeitschlitz auftretenden Störungsbild erkannt wird, daß ein Teilnehmer in einem falschen Zeitschlitz sendet.

8. Verfahren nach einem der Ansprüche 5 bis 7, **dadurch gekennzeichnet, daß** über eine die Pedaleinheit (6), die Bremsaktoren (4) und die Zentralsteuerung (13) miteinander verbindende zusätzliche Signalleitung (14) ein Sollwert für die Bremsbetätigungskraft von der Pedaleinheit (6) an die Bremsaktoren (4) und die Zentralsteuerung (13) übermittelt und Daten über den Zustand der angeschlossenen Einrichtungen ausgetauscht werden.

9. Verfahren nach Anspruch 8, **dadurch gekennzeichnet, daß** die Daten über die zusätzliche Signalleitung (14) als pulsweitenmodulierte Signale übertragen werden.

10. Verfahren nach Anspruch 8, **dadurch gekennzeichnet, daß** durch Vergleichen der über den Datenbus (12) und der über die zusätzliche Signalleitung (14) übertragenen Sollwerte für die Bremsbetätigungskraft bei nicht aktiver Bremszusatzfunktion Fehler erkannt werden.

11. Verfahren nach Anspruch 8, **dadurch gekennzeichnet, daß** die zusätzliche Signalleitung (14) als Lichtleiter ausgeführt ist und die Signale optisch übertragen werden.

## Claims

1. Brake system (1) for a motor vehicle, which has:
- a pedal unit (6) by means of which activation operations of the brake pedal (5) of the motor vehicle are sensed with at least one sensor (8) and set point values corresponding to the driver's wishes are generated for the brake activation force,
- electrically activated brake actuators (4) which are assigned to the wheels (2) of the motor vehicle,
- an electronic central control system (13) which evaluates the sensor signals and by means of which control signals for supplementary brake functions are generated,
- a databus (12) which connects the pedal unit (6), the brake actuators (4) and the central control system (13) to one another and via which data blocks are exchanged in a predefined, cyclically repeating time pattern, and
- an additional signal line (14) which connects the pedal unit (6), the brake actuators (4) and the central control system (13) to one another and via which the set point value for the brake activation force is transmitted from the pedal unit (6) to the brake actuators (4) and the central control system (13) and data relating to the state of the connected devices is exchanged, wherein the data relating to the additional signal line (14) is transmitted as pulse-width modulated signals.

2. Brake system according to Claim 1, **characterized in that** the databus (12) is embodied as a two-wire bus for symmetrically transmitting digital signals, and **in that** the subscribers connected to it, namely the brake actuators (4), pedal unit (6) and central control system (13), form nodes to which in each case a fixed time slot with exclusive transmission authorization is assigned within one transmission cycle by a subscriber which is defined as a bus master.

3. Brake system according to one of the preceding claims, **characterized in that** the pedal unit (6) has a safety circuit (10) by means of which the driver's wishes are determined as a majority decision from the signals of a plurality of redundant sensors (8) which sense the pedal movement.

4. Brake system according to one of the preceding claims, **characterized in that** the brake actuators (4) are embodied as regulators which adjust the brake activation force to the received set point value.

5. Method for transferring data in an electrically controlled motor vehicle brake system in which the following steps are carried out:
- the data is exchanged cyclically via a databus (12) between a plurality of brake actuators (4) connected as subscribers to the databus (12), a pedal unit (6) or an electronic central control system (13);
- a subscriber which acts as a bus master synchronizes all the subscribers to a global time pattern and determines a fixed time slot for each subscriber in a communication cycle within which it exclusively has transmission authorization;
- the individual subscribers transmit data blocks (16-20) which contain information relating to the current transmission cycle and the transmitter, the respective data and a check sum, and
- the data transmitted by the subscribers includes brake torque requests of the driver and of the electronic control system, measured values supplied by sensors (8) and status parameters of the subscribers.

6. Method according to Claim 5, **characterized in that** the subscriber assigned to the time slot is detected as having failed by means of a data block which is not transmitted in a time slot.

7. Method according to Claim 5, **characterized in that** the fact that a subscriber is transmitting in an incorrect time slot is detected by means of a fault pattern occurring in a time slot.

8. Method according to one of Claims 5 to 7, **characterized in that** a set point value for the brake activation force is transferred from the pedal unit (6) to the brake actuators (4) and to the central control system (13), and data relating to the state of the connected devices is exchanged, via an additional signal line (14) which connects the pedal unit (6), the brake actuators (4) and the central control system (13) to one another.

9. Method according to Claim 8, **characterized in that** the data relating to the additional signal line (14) is transmitted as pulse-width modulated signals.

10. The method as claimed in Claim 8, **characterized in that** faults are detected by comparing the set point values for the brake activation force which are transmitted via the databus (12) and the set point values for the brake activation force which are transmitted via the additional signal line (14) when the additional brake function is not active.

11. Method according to Claim 8, **characterized in that** the additional signal line (14) is embodied as a light guide and the signals are transmitted optically.

## Revendications

1. Système de freinage (1) pour un véhicule automobile comportant :
- une unité de pédale (6), par laquelle des manoeuvres de la pédale de frein (5) du véhicule automobile sont reconnues par au moins un détecteur (8) et .par laquelle sont produites des valeurs de consigne de la force d'application du frein correspondant au souhait du conducteur,
- des actionneurs de freinage (4) affectés aux roues (2) du véhicule automobile et actionnés électriquement,
- une commande électronique centralisée (13), qui analyse les signaux des détecteurs et par laquelle sont produits des signaux de commande de fonctions supplémentaires de freinage,
- un bus de donnés (12), reliant les uns aux autres l'unité de pédale (6), les actionneurs de freinage (4) et la commande centralisée (13) et par l'intermédiaire duquel des blocs de données sont échangés dans une trame de temps prescrite qui se répète cycliquement, et
- une ligne supplémentaire de signalisation (14), reliant les uns aux autres l'unité de pédale (6), les actionneurs de freinage (4) et la commande centralisée (13) et par l'intermédiaire de laquelle la valeur de consigne de la force d'application du frein est transmise de l'unité de pédale (6) aux actionneurs de freinage (4) et à la commande centralisée (13) et des données concernant l'état des dispositifs raccordés sont échangées, les données étant transmises par la ligne supplémentaire de signalisation (14) sous la forme de signaux à modulation d'impulsion en largeur.

2. Système de freinage selon la revendication 1, **caractérisée par le fait que** le bus de données (12) est conçu en tant que bus à deux fils pour une transmission symétrique de signaux numériques et que les participants, qui lui sont raccordés, à savoir les actionneurs de freinage (4), l'unité de pédale (6) et la commande centralisée (13), forment des noeuds à chacun desquels est affecté, dans un cycle de transmission, par un participant défini comme maître du bus, une fenêtre de temps fixe ayant une autorisation exclusive d'émission.

3. Système de freinage selon l'une des revendications précédentes, **caractérisé par le fait que** l'unité de pédale (6) comporte un circuit de sécurité (10) par lequel le souhait du conducteur est déterminé en tant que décision majoritaire à partir des signaux de plusieurs détecteurs (8) redondants qui relèvent le mouvement de la pédale.

4. Système de freinage selon l'une des revendications précédentes, **caractérisé par le fait que** les actionneurs de freinage (4) sont conçus en tant que régulateurs qui règlent la force d'application des freins sur la valeur de consigne reçues.

5. Procédé de transmission de données dans un système de freinage de véhicule automobile commandé électriquement, au cours duquel on exécute les stades suivants :
- les données sont échangées cycliquement par l'intermédiaire d'un bus de données (12) entre plusieurs actionneurs de freinage (4), raccordés en tant que participants au bus de données (12), une unité de pédale (6) ou une commande centralisée électronique (13) ;
- un participant, qui agit comme maître du bus, synchronise tous les participants sur une trame de temps universelle et détermine, pour chaque participant, une fenêtre de temps fixe dans un cycle de communication, dans laquelle il a autorisation exclusive d'émission ;
- les divers participants émettent des blocs de données (16-20), qui renferment des indications concernant le cycle de transmission en cours et l'expéditeur, les données correspondantes et une somme de contrôle, et
- les données émises par les participants renferment les demandes de couple de freinage du conducteur et de la commande électronique, des valeurs de mesure fournies par les détecteurs (8) et des paramètres d'état des participants.

6. Procédé selon la revendication 5, **caractérisé par le fait que**, par un bloc de données non transmis dans une fenêtre de temps, le participant, qui est affecté à la fenêtre de temps, est reconnu comme défaillant.

7. Procédé selon la revendication 5, **caractérisé par le fait que**, grâce à un scénario d'erreur qui se présente dans une fenêtre de temps, on reconnaît qu'un participant émet dans une mauvaise fenêtre de temps.

8. Procédé selon l'une des revendications 5 à 7, **caractérisé par le fait que**, par l'intermédiaire d'une ligne de signalisation supplémentaire (14), qui relie les uns aux autres l'unité de pédale (6), les actionneurs de freinage (4) et la commande centralisée (13), on transmet une valeur de consigne de la force d'application du frein de l'unité de pédale (6) aux actionneurs de freinage (4) et à la commande centralisée (13) et on échange des données concernant l'état des dispositifs raccordés.

9. Procédé selon la revendication 8, **caractérisé par le fait que** les données sont transmises sous forme de signaux à modulation d'impulsions en largeur sur la ligne de signalisation supplémentaire (14).

10. Procédé selon la revendication 8, **caractérisé par le fait que**, si la fonction supplémentaire de freinage n'est pas active, des erreurs sont reconnues par comparaison des valeurs de consigne de la force d'application du frein transmises sur le bus de données (12) avec les valeurs de consignes de la force d'application du frein transmises sur la ligne de signalisation supplémentaire (14).

11. Procédé selon la revendication 8, **caractérisé par le fait que** la ligne de signalisation supplémentaire (14) est conçue comme guide d'ondes optiques et que les signaux sont transmis optiquement.
